# FASCICULE DE BREVET EUROPEEN

(11) **EP 3 868 646 B1**
(45) Date de publication et mention de la délivrance du brevet: **15.05.2024**
(21) Numéro de dépôt: 21155129.6
(22) Date de dépôt: 04.02.2021
(51) Int. Cl.: B64B 1/62, B64B 1/64, B64B 1/58

(54) **DISPOSITIF DE PORTABILITE VARIABLE COMPRENANT UN DIFFUSEUR ANTI STRATIFICATION**
VORRICHTUNG MIT VARIABLER TRAGFÄHIGKEIT, DIE EINEN DIFFUSOR GEGEN SCHICHTUNG UMFASST
VARIABLE PORTABILITY DEVICE COMPRISING AN ANTI-STRATIFICATION DIFFUSER

(30) Priorité: 13.02.2020 FR 2001399
(43) Date de publication de la demande: 25.08.2021
(73) Titulaire: THALES, 92190 Meudon (FR)
(72) Inventeur: DU PONTAVICE, Emmanuel, 06156 Cannes La Bocca Cedex (FR); RAYNAUD, Martin, 06156 Cannes La Bocca Cedex (FR); BILLARD, Jean-Baptiste, 06156 Cannes La Bocca Cedex (FR)
(74) Mandataire: Atout PI Laplace

(56) Documents cités:
- WO-A1-95/14607
- CN-A- 108 298 058
- US-A- 3 063 657

## Description

La présente invention concerne le domaine des dispositifs de portabilité variable utilisant un gaz plus léger que l'air pour s'élever dans l'atmosphère. Plus précisément, l'invention a trait aux dispositifs de portabilité variable munis d'un unique réservoir pour stocker sous pression le gaz plus léger que l'air tel que l'hélium, le néon, le méthane, l'éthane et l'hydrogène.

Un dispositif de portabilité variable peut être interprété comme une plateforme dirigeable stratosphérique à enveloppe souple pressurisée, connue sous l'appellation anglo-saxonne « Blimp ».

Traditionnellement, les dispositifs de portabilité variable sont dotés de plusieurs ballonnets complètement hermétiques contenant le gaz plus léger que l'air. Ce sont ces ballonnets emplis du gaz plus léger que l'air qui assurent la portance des dispositifs de portabilité variable. Ces ballonnets sont compris dans une structure souple formant l'enveloppe des dispositifs de portabilité variable. Le reste du volume de l'enveloppe est occupé par de l'air. Pour monter, de l'air est éjecté et pour descendre, de l'air est injecté. La multiplicité des ballonnets d'air garantit la stabilité statique longitudinale quel que soit le taux de remplissage en air.

Ce modèle est particulièrement apprécié pour les dispositifs de portabilité variable troposphériques, là où la masse volumique de l'air est forte. Cependant, dans le cas de dispositifs de portabilité variable stratosphériques, c'est-à-dire, des dispositifs de portabilité variable dont l'altitude de croisière s'établit au-delà de la tropopause, la masse volumique de l'air est très inférieure à la masse volumique de l'air dans la troposphère. La masse des dispositifs de portabilité variable stratosphériques doit donc être diminuée afin de permettre aux dispositifs de portabilité variable de s'élever jusqu'à ces altitudes.

Or, la multiplicité des structures (l'enveloppe et les ballonnets) a tendance à fortement augmenter la masse du dispositif de portabilité variable.

L'utilisation d'un unique réservoir hermétique permettrait d'éviter l'utilisation de plusieurs ballonnets et réduirait fortement la masse embarquée.

Selon l'art antérieur décrit précédemment, le gaz plus léger que l'air étant contenu dans les ballonnets, il n'est jamais en contact direct avec l'air injecté dans l'enveloppe du dispositif de portabilité variable.

Une solution consistant à injecter de l'air directement dans un unique réservoir n'est pas viable. Le mélange hétérogène entre le gaz plus léger que l'air et l'air qui en résulte peut induire une instabilité en assiette du dispositif de portabilité variable, c'est-à-dire une trop grande différence angulaire entre le plan horizontal et l'axe longitudinal du dispositif de portabilité variable stratosphérique. Cette instabilité peut s'accroître jusqu'à incliner totalement le dispositif de portabilité variable stratosphérique à la verticale. En effet, le gaz plus léger que l'air ayant une masse volumique plus faible que la masse volumique de l'air, le gaz plus léger que l'air se disposerait naturellement dans la partie haute du réservoir laissant l'air dans la partie basse du réservoir du dispositif de portabilité variable stratosphérique. Autrement dit, dans le cas d'un ballonnet unique, l'injection d'air entraine une migration de l'air vers le bas du réservoir et génère cette instabilité en assiette. Le phénomène est le même dans le cas où l'air est injecté autour des ballonnets et est mal mélangé. L'air, comme dit précédemment, plus dense que le gaz plus léger que l'air, migre vers le bas de l'enveloppe. La disposition n'étant pas homogène sur l'axe longitudinal du dispositif de portabilité variable stratosphérique, une instabilité de l'angle de l'assiette apparait.

Lors des phases de variation de la portance, comme en phase de descente, il est donc nécessaire d'obtenir un mélange homogène à l'intérieur d'un potentiel unique réservoir afin d'assurer la pilotabilité d'un tel dispositif de portabilité variable stratosphérique.

Des solutions ont été envisagées comme décrites dans les documents CN 108 298 058 A, WO 95/14607 A1 et US 3 063 657 A mais ne sont pas satisfaisantes.

L'invention vise à pallier tout ou partie des problèmes cités plus haut en proposant un dispositif de portabilité variable comprenant mélangeur capable d'assurer un mélange homogène entre de l'air et un gaz plus léger que l'air au sein d'une unique enceinte hermétique sous pression.

A cet effet, l'invention a pour objet un dispositif de portabilité variable comportant :
- une enceinte hermétique sous pression accueillant un gaz de masse volumique inférieure à la masse volumique de l'air en contact avec un milieu extérieur;
- un mélangeur disposé au moins partiellement à l'intérieur de l'enceinte hermétique configuré pour introduire de l'air à l'intérieur de l'enceinte hermétique, et pour mélanger, à l'intérieur de l'enceinte hermétique, l'air introduit avec le gaz de masse volumique inférieure à la masse volumique de l'air.

En outre, le mélangeur comprend une gaine pourvue d'au moins une perforation et au moins un injecteur, connecté au milieu extérieur, d'air dans la gaine.

Selon un aspect de l'invention, la gaine est obtenue à partir d'un tissu poreux.

Selon un aspect de l'invention, le dispositif de portabilité variable s'étend selon un premier axe longitudinal et la gaine possède une forme de tube s'étendant sensiblement selon le premier axe longitudinal du dispositif de portabilité variable.

Selon un aspect de l'invention, la gaine s'étend selon un deuxième axe sécant au premier axe longitudinal du dispositif de portabilité variable.

Selon un aspect de l'invention, au moins un injecteur est placé le long de la gaine du mélangeur selon le premier axe longitudinal du dispositif de portabilité variable.

Selon un aspect de l'invention, au moins un injecteur est placé à une extrémité de la gaine du mélangeur.

Selon un aspect de l'invention, une section de la gaine du mélangeur sensiblement perpendiculaire au premier axe longitudinal est définie par une dimension caractéristique supérieure à 15 centimètres.

Selon un aspect de l'invention, la section de la gaine du mélangeur sensiblement perpendiculaire au premier axe longitudinal est définie par une dimension caractéristique inférieure à 250 centimètres.

L'invention sera mieux comprise et d'autres avantages apparaîtront à la lecture de la description détaillée d'un mode de réalisation donné à titre d'exemple, description illustrée par le dessin joint dans lequel :
[Fig.1a] la figure 1a représente une vue latérale schématisée d'une vue en coupe du dispositif de portabilité variable selon l'invention ;
[Fig.1b] la figure 1b représente une vue frontale schématisée d'une vue en coupe du dispositif de portabilité variable selon l'invention ;
[Fig.2a] la figure 2a représente une vue schématisée du mélangeur du dispositif de portabilité variable selon un premier mode de réalisation.
[Fig.2b] la figure 2b représente une variante du premier mode de réalisation du mélangeur du dispositif de portabilité variable.
[Fig.3a] la figure 3a représente une vue schématisée du mélangeur du dispositif de portabilité variable selon un deuxième mode de réalisation.
[Fig.3b] la figure 3b représente une variante du deuxième mode de réalisation du mélangeur du dispositif de portabilité variable.
[Fig.4] la figure 4 représente une vue schématisée du mélangeur du dispositif de portabilité variable selon un troisième mode de réalisation.

Par souci de clarté, les mêmes éléments porteront les mêmes repères dans les différentes figures.

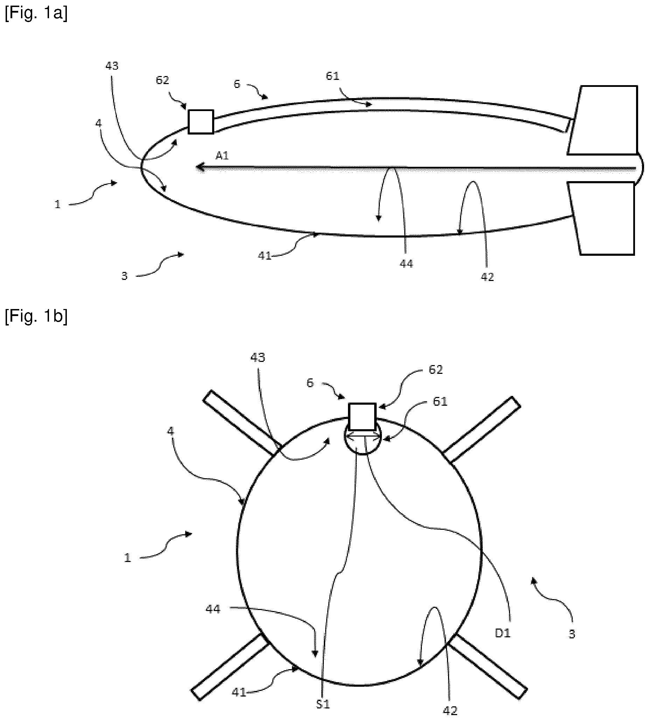

La figure 1a représente une vue latérale schématisée d'une vue en coupe d'un dispositif de portabilité variable 1. La vue en coupe de la figure 1a est réalisée selon un plan vertical comprenant un axe longitudinal A1 du dispositif de portabilité variable 1. La figure 1b représente une vue frontale schématisée d'une vue en coupe du dispositif de portabilité variable 1. La vue en coupe de la figure 1b est réalisée selon un plan vertical perpendiculaire à l'axe longitudinal A1 du dispositif de portabilité variable 1. Le dispositif de portabilité variable 1 comporte une enceinte hermétique 4 sous pression destinée à accueillir un gaz de masse volumique inférieure à la masse volumique de l'air. Cette enceinte hermétique 4 peut correspondre, d'un point de vue extérieur à l'enveloppe du dispositif de portabilité variable 1. L'enceinte hermétique 4 est donc au contact, suivant une face externe 41, d'un milieu extérieur 3, et, suivant une face interne 42, du gaz de masse volumique inférieur à la masse volumique de l'air. L'enceinte hermétique 4 assure l'étanchéité entre le milieu extérieur 3 et le gaz contenu dans l'enceinte hermétique 4. Toutefois l'invention s'applique aussi avec un ballonnet additionnel contenant le gaz plus léger que l'air qui assure l'étanchéité. Dans ce cas, le ballonnet additionnel joue le rôle de l'enceinte hermétique 4.

Le dispositif de portabilité variable 1 comporte également un mélangeur 6, disposé partiellement dans l'enceinte hermétique 4 capable d'introduire de l'air à l'intérieur de l'enceinte hermétique 4 et de mélanger cet air avec le gaz de masse volumique inférieure à la masse volumique de l'air à l'intérieur de l'enceinte hermétique 4. En effet, le mélangeur 6 comprend une gaine 61 disposée à l'intérieur de l'enceinte hermétique 4 et un injecteur 62 connecté d'une part à la gaine 61 et d'autre part au milieu extérieur 3. De cette manière, l'injecteur 62 permet d'injecter de l'air du milieu extérieur 3 à l'intérieur de la gaine 61.

Le mélangeur 6 est positionné contre une partie supérieure 43 de la face interne 42 de l'enceinte hermétique 4. Plus précisément, la gaine 61 du mélangeur 6 est positionnée contre la partie supérieure 43 de l'enceinte hermétique 4 et l'injecteur 62 transperce la partie supérieure 43 de l'enceinte hermétique 4 afin de pouvoir communiquer avec l'air du milieu extérieur 3. Plus généralement, l'invention s'applique avec un injecteur 62 connecté à la gaine 61, quel que soit son positionnement au niveau de la gaine 61.

De cette manière, l'injecteur 62 permet d'injecter de l'air provenant du milieu extérieur 3 dans la gaine 61. Ainsi, l'air passe à travers la gaine 61 de manière homogène et se diffuse dans l'enceinte hermétique 4.

La gaine 61 du mélangeur 6 prend avantageusement la forme d'un tube et s'étend sensiblement selon l'axe longitudinal A1 qui est défini comme l'axe traversant horizontalement le dispositif de portabilité variable 1. Ainsi, la gaine 61 peut prendre toute forme de tube comme par exemple et de façon non limitative un tube à section carré ou un tube à section circulaire. Avantageusement, la gaine 61 est souple et prend naturellement la forme d'un tube cylindrique. Selon l'invention, la gaine 61 peut prendre toute autre forme occupant une portion de volume dans l'enceinte hermétique 4.

La gaine 61 peut être obtenue à partir d'un matériau rigide comme du polychlorure de vinyle ou autre matériau plastique rigide. Avantageusement, la gaine 61 est obtenue à partir d'un matériau souple comme un tissu. Ainsi, la masse de la gaine 61 est réduite.

En outre, la gaine 61 peut être définie par une section de gaine S1 qui est la section du tube. Cette section peut être une section carrée pour une gaine 61 en tube à section carré ou peut être une section circulaire pour une gaine 61 cylindrique. La section de gaine S1 est définie par une dimension caractéristique D1. Pour une section de gaine S1 carrée, la dimension caractéristique D1 peut être une section droite et pour une section de gaine S1 circulaire, la dimension caractéristique D1 peut être le diamètre. Avantageusement, la dimension caractéristique D1 est le diamètre de la section de la gaine S1 circulaire. La dimension caractéristique D1 est une longueur qui dépend des dimensions du dispositif de portabilité variable 1. Néanmoins, la dimension caractéristique D1 peut être définie comme une longueur comprise entre 15 centimètres et 250 centimètres. Idéalement, la dimension caractéristique D1 est une longueur de 100 centimètres.

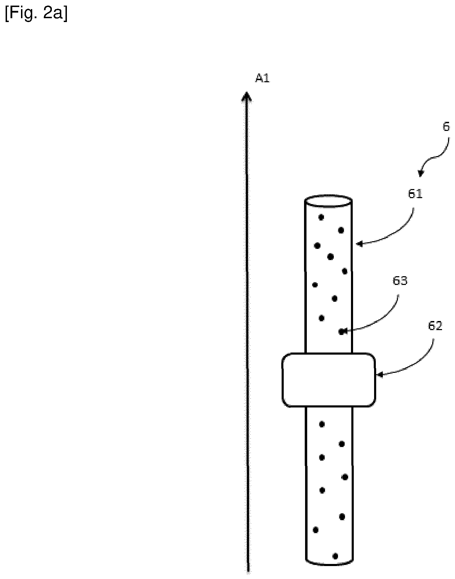

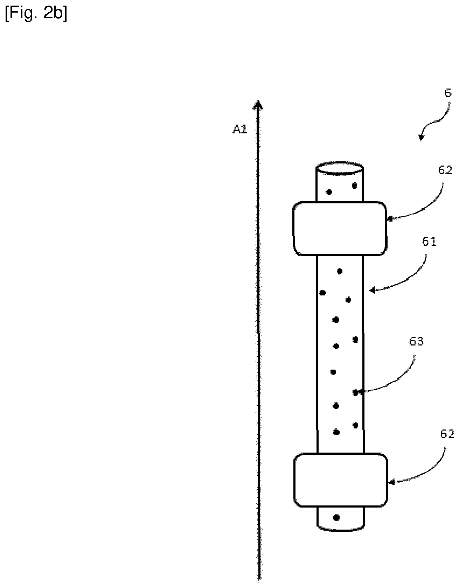

De plus, comme le montrent les figures 2a et 2b, qui représentent la gaine 61 accompagnée d'un injecteur 62 pour la figure 2a et de deux injecteurs pour la figure 2b, la gaine 61 est percée dans son entièreté de multiples perforations 63. Il s'agit d'un exemple d'application. L'invention concerne aussi le cas où la gaine 61 est partiellement percée, c'est-à-dire avec une perforation 63 au minimum, et avantageusement une pluralité de perforations 63.

Les perforations 63 de la gaine 61 permettent d'obtenir un échange direct entre l'air injecté par l'injecteur 62 et le gaz de masse volumique inférieure à la masse volumique de l'air. Ainsi, des échanges convectifs peuvent apparaitre entre l'air du milieu extérieur 3 injecté par l'injecteur 62 et le gaz de masse volumique inférieure à la masse volumique de l'air. En effet, l'air injecté dans la gaine 61 à l'aide de l'injecteur 62 crée une surpression à l'intérieur de la gaine 61. L'évacuation de l'air en surplus au sein de la gaine 61 se fait alors par l'intermédiaire des perforations 63. La densité de l'air injecté étant plus importante que celle du gaz de masse volumique inférieure à la masse volumique de l'air, l'air injecté migre naturellement vers une partie inférieure 44 de l'enceinte hermétique 4 ce qui crée une cellule de convection qui favorise le mélange dans l'enceinte hermétique 4.

De manière profitable, le tissu à l'origine de la gaine 61 est poreux. En effet, la porosité est définie comme l'ensemble des vides d'un matériau solide. Or un vide dans un matériau solide peut être interprété comme une perforation. Un tissu poreux est donc un tissu doté de multiples perforations 63. Ainsi, à titre d'exemple, la gaine 61 est obtenue à partir d'un tissu poreux afin d'améliorer du mieux possible le passage de l'air injecté par l'injecteur 62 de la gaine 61 vers l'enceinte hermétique 4. Les multiples perforations 63, obtenues soit par des perforations en tant que telles ou soit via la porosité de la gaine, permettent d'augmenter la surface de contact entre l'air injecté et le gaz présent dans l'enceinte hermétique 4. En effet, la zone de mélange est assimilable à un triangle isocèle de sommet principal la zone d'injection de l'air. La surface de contact est alors constituée par les côtés du triangle ainsi formé. La surface de la zone de mélange entre les deux gaz ainsi augmentée contribue au bon mélange de l'air dans le gaz de l'enceinte hermétique 4.

Le mélangeur 6 peut comporter selon un premier mode de réalisation, comme représenté sur la figure 2a, un unique injecteur 62 positionné le long de la gaine 61.

Par ailleurs, le mélangeur 6 peut comporter deux injecteurs 62, comme représenté sur la figure 2b, positionnés le long de la gaine 61. L'invention est également applicable au cas où le mélangeur 6 comprend plus de deux injecteurs 62.

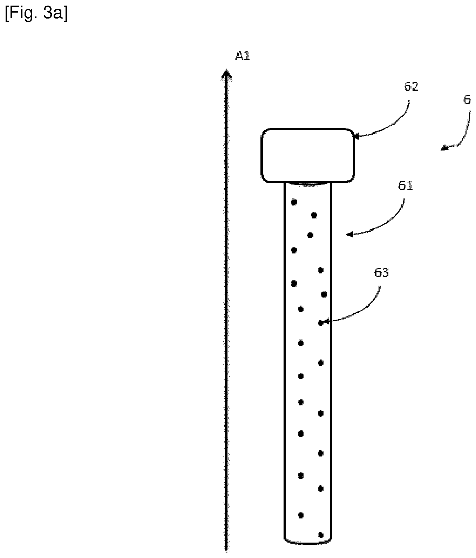

Préférentiellement, comme représenté en figure 3a, l'injecteur 62 est positionné, selon un deuxième mode de réalisation, à une extrémité de la gaine 61 du mélangeur 6 suivant l'axe longitudinal A1.

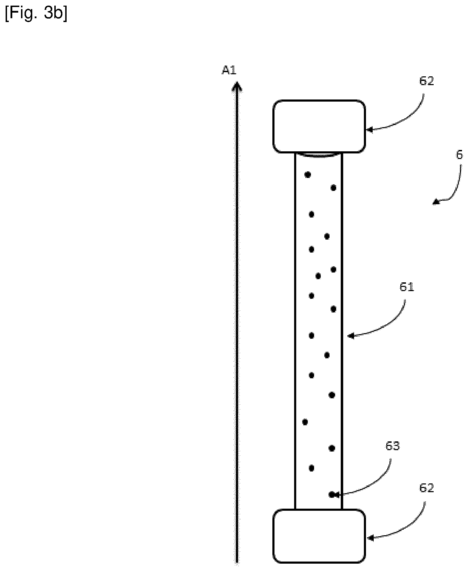

De la même manière, deux injecteurs 62 peuvent être positionnés à des extrémités différentes de la gaine 61 du mélangeur 6 suivant l'axe longitudinal A1, comme représenté sur la figure 3b. Le mélangeur 6 peut comporter plus de deux injecteurs 62 tant que la masse ajoutée par le nombre d'injecteur 62 ne pénalise pas la portance et le poids global du dispositif de portabilité variable 1.

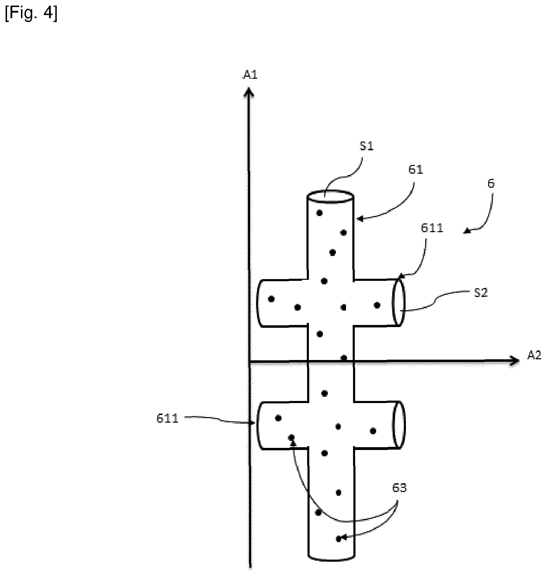

Enfin, un troisième mode de réalisation, représenté en figure 4, peut être envisagé. La gaine 61 du mélangeur 6 qui s'étend selon l'axe longitudinal A1, peut comprendre une partie secondaire 611 de la gaine 61. La partie secondaire 611 de la gaine 61 prend la forme tubulaire de la gaine 61 et s'étend selon un deuxième axe A2 sécant à l'axe longitudinal A1 du dispositif de portabilité variable 1. Dans un mode de réalisation préférentiel, le deuxième axe A2 est orthogonal à l'axe longitudinal A1. La partie secondaire 611 de la gaine 61 comprend, comme la gaine 61, au moins une et préférentiellement une pluralité de perforations 63.

En outre, la partie secondaire 611 de la gaine 61 est définie par une section secondaire S2. La section secondaire S2 est, préférentiellement, identique à la section de la gaine S1. Cependant, la section secondaire S2 de la partie secondaire 611 de la gaine 61 peut être différente de la section de la gaine S1.

Ce mode de réalisation représenté en figure 4 permet d'augmenter la surface potentielle d'échange entre l'air injecté à travers les perforations 63 de la gaine 61 et de la partie secondaire 611 et le gaz de masse volumique inférieure à la masse volumique de l'air. De cette manière, l'homogénéisation du mélange s'en trouve améliorée.

L'invention repose sur l'injection d'un gaz dit lourd sur un gaz dit léger contenu dans l'enceinte hermétique 4. Cette injection (c'est-à-dire l'injection de l'air dans l'enceinte hermétique 4) se fait avantageusement sur une grande surface, le long de la gaine 61 du mélangeur 6, afin d'obtenir un mélange optimal entre les deux gaz. Il en résulte la formation de cellules de convection qui permettent d'améliorer le mélange des gaz et le transfert thermique avec le milieu extérieur 3. Ainsi, l'invention tire profit d'une injection d'air dans la gaine 61 et du mélange des gaz dans l'enceinte hermétique 4 pour offrir une bonne pilotabilité du dispositif de portabilité variable 1 pendant sa descente.

## Revendications

1. Dispositif de portabilité variable (1) comportant:
• une enceinte hermétique (4) sous pression accueillant un gaz de masse volumique inférieure à la masse volumique de l'air en contact avec un milieu extérieur (3) ;
• un mélangeur (6) disposé au moins partiellement à l'intérieur de l'enceinte hermétique (4) configuré pour introduire de l'air à l'intérieur de l'enceinte hermétique (4) et pour mélanger, à l'intérieur de l'enceinte hermétique 4, l'air introduit avec le gaz de masse volumique inférieure à la masse volumique de l'air, le mélangeur (4) comprenant une gaine (61) pourvue d'au moins une perforation (63) et au moins un injecteur (62), connecté au milieu extérieur (3), d'air dans la gaine (61).

2. Dispositif de portabilité variable (1) selon la revendication 1, dans lequel la gaine (61) est obtenue à partir d'un tissu poreux.

3. Dispositif de portabilité variable (1) selon l'une des revendications 1 à 2, s'étendant selon un premier axe longitudinal (A1), dans lequel la gaine (61) possède une forme de tube s'étendant sensiblement selon le premier axe longitudinal (A1) du dispositif de portabilité variable (1).

4. Dispositif de portabilité variable (1) selon la revendication 3, dans lequel la gaine (61) s'étend selon un deuxième axe (A2) sécant au premier axe longitudinal (A1) du dispositif de portabilité variable (1).

5. Dispositif de portabilité variable (1) selon l'une des revendications 1 à 4, dans lequel l'au moins un injecteur (62) est placé le long de la gaine (61) du mélangeur (6) selon le premier axe longitudinal (A1) du dispositif de portabilité variable (1).

6. Dispositif de portabilité variable (1) selon la revendication 5, dans lequel l'au moins un injecteur (62) est placé à une extrémité de la gaine (61) du mélangeur (6).

7. Dispositif de portabilité variable (1) selon l'une des revendications 3 à 6, dans lequel une section de la gaine (S1) du mélangeur (6) sensiblement perpendiculaire au premier axe longitudinal (A1) est définie par une dimension caractéristique (D1) supérieure à 15 centimètres.

8. Dispositif de portabilité variable (1) selon l'une des revendications 3 à 7, dans lequel la section de la gaine (S1) du mélangeur sensiblement perpendiculaire au premier axe longitudinal (A1) est définie par une dimension caractéristique (D1) inférieure à 250 centimètres.

## Patentansprüche

1. Variable Tragbarkeitsvorrichtung (1), die Folgendes aufweist:
• eine unter Druck stehende hermetische Kammer (4), die ein Gas mit einer geringeren Dichte als die Dichte von der mit einer äußeren Umgebung (3) in Kontakt stehenden Luft aufnimmt;
• einen Mischer (6), der mindestens teilweise innerhalb der hermetischen Kammer (4) angeordnet ist, der so konfiguriert ist, dass er Luft in das Innere der hermetischen Kammer (4) einführt und innerhalb der hermetischen Kammer 4 die eingeführte Luft mit dem Gas mit einer geringeren Dichte als die Dichte der Luft mischt, wobei der Mischer (4) eine mit mindestens einer Perforation (63) versehene Hülle (61) und mindestens einen mit der äußeren Umgebung (3) verbundenen Injektor (62) für Luft in die Hülle (61) umfasst.

2. Variable Tragbarkeitsvorrichtung (1) nach Anspruch 1, wobei die Hülle (61) aus einem porösen Gewebe erhalten wird.

3. Variable Tragbarkeitsvorrichtung (1) nach einem der Ansprüche 1 bis 2, die sich entlang einer ersten Längsachse (A1) erstreckt, wobei die Hülle (61) eine Rohrform besitzt, die sich im Wesentlichen entlang der ersten Längsachse (A1) der variablen Tragbarkeitsvorrichtung (1) erstreckt.

4. Variable Tragbarkeitsvorrichtung (1) nach Anspruch 3, wobei sich die Hülle (61) entlang einer zweiten Achse (A2) erstreckt, die die erste Längsachse (A1) der variablen Tragbarkeitsvorrichtung (1) schneidet.

5. Variable Tragbarkeitsvorrichtung (1) nach einem der Ansprüche 1 bis 4, wobei der mindestens eine Injektor (62) entlang der Hülle (61) des Mischers (6) entlang der ersten Längsachse (A1) der variablen Tragbarkeitsvorrichtung (1) platziert ist.

6. Variable Tragbarkeitsvorrichtung (1) nach Anspruch 5, wobei der mindestens eine Injektor (62) an einem Ende der Hülle (61) des Mischers (6) platziert ist.

7. Variable Tragbarkeitsvorrichtung (1) nach einem der Ansprüche 3 bis 6, wobei ein Querschnitt der Hülle (S1) des Mischers (6), der im Wesentlichen senkrecht zur ersten Längsachse (A1) verläuft, durch eine charakteristische Abmessung (D1) definiert ist, die größer als 15 Zentimeter ist.

8. Variable Tragbarkeitsvorrichtung (1) nach einem der Ansprüche 3 bis 7, wobei der Querschnitt der Hülle (S1) des Mischers, der im Wesentlichen senkrecht zur ersten Längsachse (A1) verläuft, durch eine charakteristische Abmessung (D1) definiert ist, die kleiner als 250 Zentimeter ist.

## Claims

1. Variable-liftability device (1), having:
• a pressurised hermetically sealed chamber (4) accepting a gas of density lower than the density of the air in contact with external surroundings (3);
• a mixer (6) arranged at least partially inside the hermetically sealed chamber (4) and configured to introduce air into the hermetically sealed chamber (4) and to mix, inside the hermetically sealed chamber 4, the introduced air with the gas of density lower than the density of the air, the mixer (4) comprising a sleeve (61) provided with at least one perforation (63) and at least one injector (62), connected to the external surroundings (3), for injecting air into the sleeve (61).

2. Variable-liftability device (1) according to claim 1, wherein the sleeve (61) is obtained from a porous fabric.

3. Variable-liftability device (1) according to one of claims 1 to 2, extending along a longitudinal first axis (A1), wherein the sleeve (61) has the form of a tube extending substantially along the longitudinal first axis (A1) of the variable-liftability device (1).

4. Variable-liftability device (1) according to claim 3, wherein the sleeve (61) extends along a second axis (A2) secant to the longitudinal first axis (A1) of the variable-liftability device (1).

5. Variable-liftability device (1) according to one of claims 1 to 4, wherein the at least one injector (62) is positioned along the sleeve (61) of the mixer (6) along the longitudinal first axis (A1) of the variable-liftability device (1).

6. Variable-liftability device (1) according to claim 5, wherein the at least one injector (62) is positioned at one end of the sleeve (61) of the mixer (6).

7. Variable-liftability device (1) according to one of claims 3 to 6, wherein a cross-section of the sleeve (S1) of the mixer (6) substantially perpendicular to the longitudinal first axis (A1) is defined by a characteristic dimension (D1) greater than 15 centimetres.

8. Variable-liftability device (1) according to one of claims 3 to 7, wherein the cross-section of the sleeve (S 1) of the mixer substantially perpendicular to the longitudinal first axis (A1) is defined by a characteristic dimension (D1) smaller than 250 centimetres.
